# FASCICULE DE BREVET EUROPEEN

(11) **EP 4 182 228 B1**
(45) Date de publication et mention de la délivrance du brevet: **27.11.2024**
(21) Numéro de dépôt: 21739397.4
(22) Date de dépôt: 07.07.2021
(51) Int. Cl.: B64D 11/06

(54) **UNITE DE SIEGE MUNIE D'UNE STRUCTURE BASSE DE SIEGE DE TYPE TUBULAIRE**
SITZEINHEIT MIT ROHRFÖRMIGER SITZBASISSTRUKTUR
SEAT UNIT PROVIDED WITH A TUBULAR SEAT-BASE STRUCTURE

(30) Priorité: 16.07.2020 FR 2007447
(43) Date de publication de la demande: 24.05.2023
(73) Titulaire: Safran Seats, 78370 Plaisir (FR)
(72) Inventeur: CAILLETEAU, Jeremy, 77550 MOISSY-CRAMAYEL (FR); CAZALIS, Olivier, 77550 MOISSY-CRAMAYEL (FR); LIGONNIERE, Laurent, 77550 MOISSY-CRAMAYEL (FR)
(74) Mandataire: Marconnet, Sébastien
(86) Numéro de dépôt international: PCT/EP2021/068885
(87) Numéro de publication internationale: WO 2022/013039

(56) Documents cités:
- WO-A1-2020/091820
- GB-A- 547 453
- US-A- 3 037 812
- US-A1- 2018 215 469

## Description

La présente invention porte sur une unité de siège munie d'une structure basse de siège de type tubulaire. L'invention trouve une application particulièrement avantageuse, mais non exclusive, avec les unités de sièges d'avion de type "classe affaire". Par "unité de siège", on entend le siège en tant que tel, ainsi que tous les éléments associés au siège, tels qu'une coque d'intimité, la structure basse de siège, et le cas échéant un accoudoir, une console, ou autre.

Une structure basse d'unité de siège est une pièce d'interface assurant une liaison mécanique entre les rails de l'avion et au moins un élément du siège, tel qu'une cinématique d'assise et de dossier.

Comme cela est représenté sur la figure 1, une structure basse de siège 1 décrite dans le document EP18159172 comporte, de façon connue en soi, un panneau de renfort 2 ainsi qu'une traverse avant 3 et une traverse arrière 4 situées de part et d'autre du panneau de renfort 2. Les traverses 3 et 4 sont généralement constituées par des poutres.

L'assemblage de cet ensemble est réalisé au moyen de deux longerons 5, 6 munis chacun d'une gorge recevant un bord du panneau de renfort 2. Les longerons 5, 6 sont fixés au panneau 2 par exemple par rivetage et l'assemblage des longerons 5, 6 sur les poutres 3, 4 est effectué par visserie.

La structure basse 1 comporte en outre des pieds 7 sur sa face supérieure pour la fixation avec une cinématique d'assise et de dossier ainsi que des équerres 8 permettant la fixation d'une coque d'intimité.

La structure basse 1 est également équipée de verrous 9 portés par les traverses 3, 4. Les verrous 9 assurent la liaison mécanique entre la structure basse de siège 1 et des rails s'étendant le long du plancher de la cabine d'avion. Les assemblages des longerons, des fixations des rails et des coques sur les poutres sont réalisés par visserie.

Alternativement, comme cela est représenté sur la figure 2, la structure basse de siège 1 décrite dans le document FR1912243 comporte une plinthe 11 usinée munie en face inférieure de verrous 9 assurant une liaison mécanique entre la structure basse 1 et des rails de la cabine d'avion. La structure basse 1 comporte en outre des pieds 7 sur sa face supérieure pour la fixation avec une cinématique d'assise et de dossier ainsi que des équerres 8 permettant la fixation de la coque d'intimité.

Les structures basses de siège peuvent présenter de multiples configurations possibles liées notamment à l'adaptation de l'angle des sièges par rapport à l'axe de la cabine, à la plateforme particulière de l'avion, ainsi qu'aux demandes spécifiques des compagnies aériennes. Cela implique une grande diversité de pièces d'interface pour le montage des verrous ainsi que des équerres de fixation.

Cette multiplication des pièces d'interface engendre une conception complexe, de la masse supplémentaire, ainsi que des risques d'erreurs de montage et un temps d'assemblage important.

En outre, les tolérances étant dépendantes des chaînes de côtes pour les assemblages mécaniques, la tolérance de l'assemblage mécanique augmente avec le nombre de pièces d'interface.

L'assemblage d'un grand nombre de pièces limite également l'espace disponible pour la fixation de boîtiers électriques destinés à alimenter, via un ensemble de faisceaux électriques, les différents organes électriques de l'unité de siège, tels que des actionneurs du siège ou des écrans vidéo d'un système de divertissement de type IFE (pour "Inflight Entertainment" en anglais).

Par ailleurs, dans le cadre du respect de nouvelles règlementations de plus en plus contraignantes, les structures basses connues commencent à atteindre leurs limites en termes de tenue des efforts mécaniques en cas de choc.

Le document WO2020/091820 décrit un siège de passager comprenant un cadre de siège et une pluralité de pieds s'étendant vers le bas depuis le cadre de siège. Chaque pied comprend une extrémité supérieure fixée au cadre de siège et une extrémité inférieure. Au moins un tube est fixé à l'extrémité inférieure d'au moins un des pieds.

L'invention vise à remédier efficacement aux inconvénients précités en proposant une unité de siège, notamment pour une cabine d'avion, selon la revendication 1.

L'invention permet ainsi, grâce à la structure tubulaire de la structure basse, de conférer à la structure basse une plus grande souplesse de conception et une plus grande modularité en autorisant un déplacement des fixations en fonction d'une position des rails dans la cabine d'avion sans avoir à créer de nouvelles pièces d'interface.

La conception tubulaire de l'ensemble permet également de maîtriser la zone subissant la torsion en cas de crash, ce qui améliore le comportement de la structure subissant une forte contrainte mécanique. En effet, tout en conservant une bonne rigidité suivant les directions liées au crash, la structure tubulaire crée une souplesse autorisant une déformation de la structure en correspondance avec celle du plancher de la cabine d'avion.

La structure tubulaire, qui pourra être réalisée sur un gabarit de soudage, permet en outre de mieux gérer les tolérances en supprimant la dispersion de jeu générée par des assemblages à vis. L'invention permet également un gain en masse par rapport aux structures basses de sièges connues. L'invention permet en outre de dégager un espace sous le siège, ce qui facilite l'intégration des boîtiers électriques.

Par ailleurs, l'invention permet de faciliter le démontage du châssis lors d'interventions de maintenance pour accéder à un boîtier électrique défectueux situé sous le siège. Il est à noter également qu'en intégrant les pieds de fixation à la structure basse de siège, l'invention permet de faciliter l'installation de la cinématique d'assise et de dossier sur le châssis.

Selon une réalisation de l'invention, les pieds de fixation s'étendent en saillie par rapport à un plan dans lequel s'étendent le premier tube inférieur et le deuxième tube inférieur du châssis.

Selon une réalisation de l'invention, un guide de fixation est disposé sur une portion supérieure d'un pied de fixation correspondant.

Selon une réalisation de l'invention, le premier tube inférieur et le deuxième tube inférieur sont cintrés de sorte qu'un écart entre le premier tube inférieur et le deuxième tube inférieur est variable lorsqu'on se déplace d'une extrémité à l'autre des tubes.

Selon une réalisation de l'invention, la ceinture de renforcement est entourée par une partie de la coque d'intimité.

Selon une réalisation de l'invention, la ceinture de renforcement s'étend verticalement suivant une hauteur comprise entre 12 cm et 50 cm, et valant de préférence de l'ordre de 38 cm.

Selon une réalisation de l'invention, la coque d'intimité comporte une partie inférieure et une partie supérieure, de sorte qu'il est possible de démonter uniquement la partie inférieure pour accéder à des boîtiers électriques situés sous le siège.

Selon une réalisation de l'invention, au moins une goulotte de passage de faisceaux électriques est fixée sur la ceinture de renforcement.

Selon une réalisation de l'invention, ladite unité de siège comporte trois verrous de façon à présenter une configuration à trois points de fixation.

Selon une réalisation de l'invention, un verrou est associé à un support de verrou.

Selon une réalisation de l'invention, le support de verrou comporte une seule ouverture pour le passage d'un tube inférieur de façon à autoriser un déplacement du support de verrou le long du tube inférieur avant immobilisation par soudage dudit support de verrou dans une position correspondant à un positionnement d'un rail.

Selon une réalisation de l'invention, le support de verrou comporte deux ouvertures pour le passage respectivement du premier tube inférieur et du deuxième tube inférieur de façon à autoriser un déplacement du support de verrou le long des tubes inférieurs avant immobilisation par soudage dudit support de verrou dans une position correspondant à un positionnement d'un rail.

Selon une réalisation de l'invention, le support de verrou est réalisé en deux parties.

L'invention concerne en outre un avion comportant une pluralité d'unités de sièges telles que précédemment définies.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:

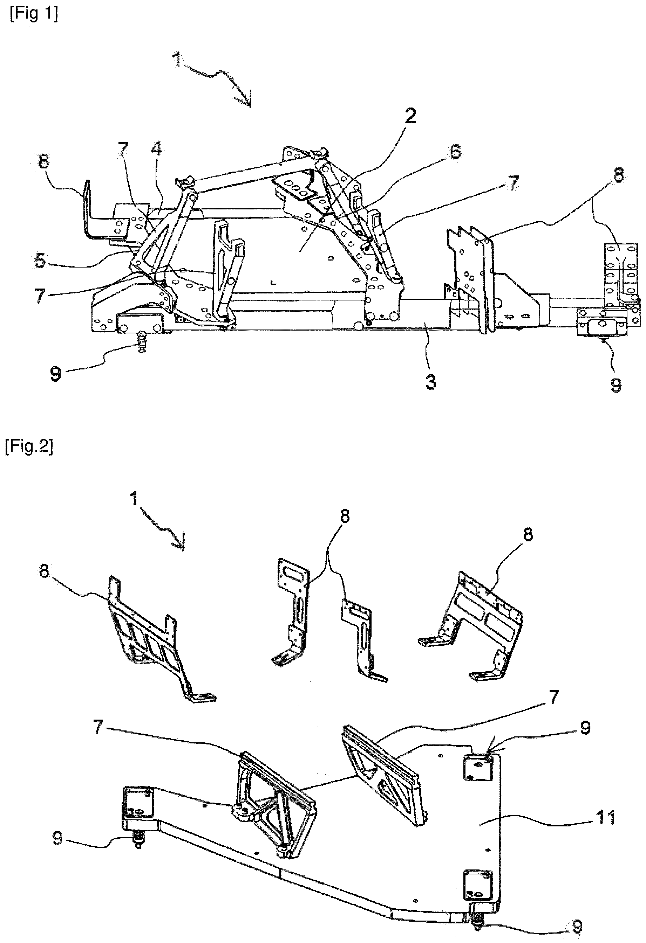

[Fig. 1] La figure 1, déjà décrite, est une vue en perspective d'un premier type de structure basse de siège selon l'état de la technique;
[Fig. 2] La figure 2, déjà décrite, est une vue en perspective d'un deuxième type de structure basse de siège selon l'état de la technique;
[Fig. 3a] [Fig. 3b] La figure 3a et la figure 3b sont des vues en perspective d'une unité de siège selon l'invention respectivement avant et après montage d'un siège sur la structure basse de siège;
[Fig. 4a] [Fig. 4b] La figure 4a et la figure 4b sont des vues de côté d'une partie basse d'une unité de siège selon l'invention respectivement avant et après montage d'un siège sur la structure basse de siège;
[Fig. 5] La figure 5 est une vue en perspective d'une structure basse de siège selon la présente invention;
[Fig. 6] La figure 6 est une vue en perspective d'une structure basse de siège selon la présente invention et des boîtiers électriques associés à des faisceaux électriques destinés à être connectés à des organes électriques de l'unité de siège;
[Fig. 7] La figure 7 est une vue en perspective de goulottes de passage des faisceaux électriques disposées sur une ceinture de renforcement de la structure basse de siège selon la présente invention;
[Fig. 8a] La figure 8a est une vue en perspective d'une coque d'intimité réalisée en deux parties à l'état assemblé;
[Fig. 8b] La figure 8b est une vue en perspective illustrant la possibilité de démonter une partie inférieure de la coque d'intimité pour accéder aux boîtiers électriques situés sous le siège;
[Fig. 9] La figure 9 est une vue en perspective de dessous montrant le système de fixation permettant de fixer la coque d'intimité à la structure basse de siège;
[Fig. 10] La figure 10 est vue en perspective détaillée du système de fixation permettant de fixer la coque d'intimité à la structure basse de siège;
[Fig. 11a] [Fig. 11b] Les figures 11a et 11b sont respectivement des vues en coupe longitudinale et transversale d'un premier mode de réalisation d'un support de verrou selon l'invention et d'un verrou associé;
[Fig. 12a] [Fig. 12b] Les figures 12a et 12b sont respectivement des vues en coupe longitudinale et transversale d'un deuxième mode de réalisation d'un support de verrou selon l'invention et d'un verrou associé;
[Fig. 13a] [Fig. 13b] Les figures 13a et 13b sont respectivement des vues en coupe longitudinale et transversale d'un troisième mode de réalisation d'un support de verrou selon l'invention et d'un verrou associé;
[Fig. 14] La figure 14 est une vue en perspective d'un gabarit utilisé pour la fabrication de la structure basse de siège selon la présente invention.

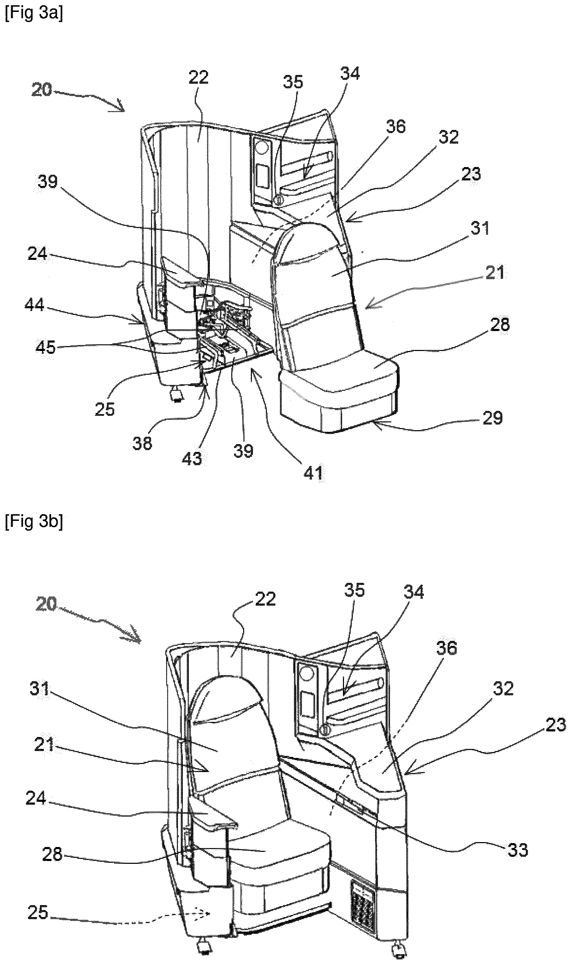

Il est à noter que, sur les figures 3a et suivantes, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Les figures 3a et 3b montrent une unité de siège 20, notamment pour une cabine d'avion, comportant un siège 21, une coque d'intimité 22 qui s'étend autour du siège 21 de façon à isoler le passager par rapport à l'environnement extérieur, une console 23, un accoudoir 24, ainsi qu'une structure basse de siège 25 destinée à assurer une fixation de l'ensemble sur des rails 26 de la cabine d'avion.

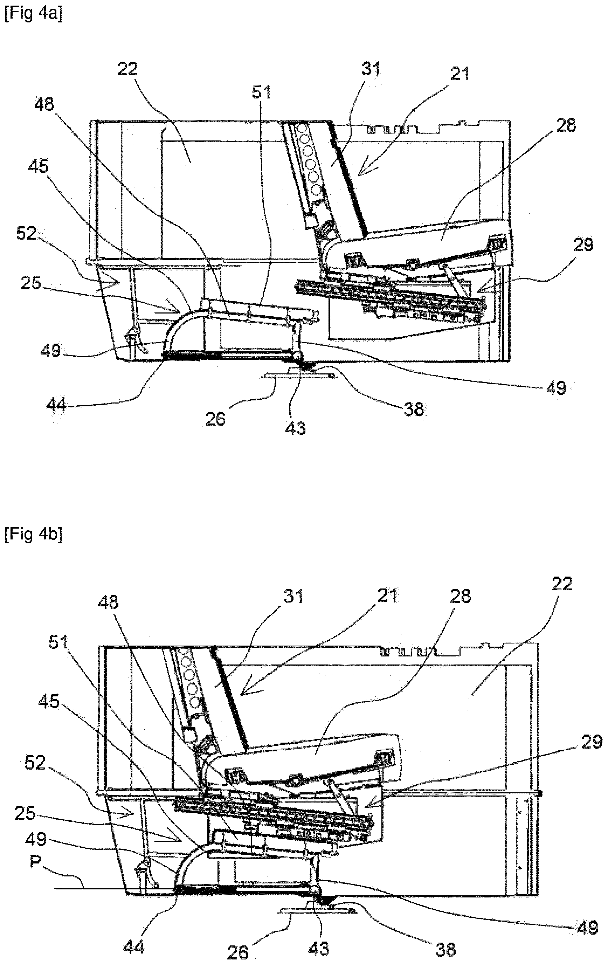

Plus précisément, le siège 21 comporte une assise 28 ainsi qu'un dossier 31 inclinable. Le siège 21 est de préférence un siège de type "business" mobile entre une position assise et une position lit dans laquelle les différents composants du siège 21 s'étendent suivant un plan sensiblement horizontal. Une cinématique d'assise et de dossier 29 visible sur les figures 4a et 4b comporte des composants mécaniques permettant d'assurer un déplacement de l'assise 28 et du dossier 31, notamment pour passer de la position assise à la position lit, et inversement.

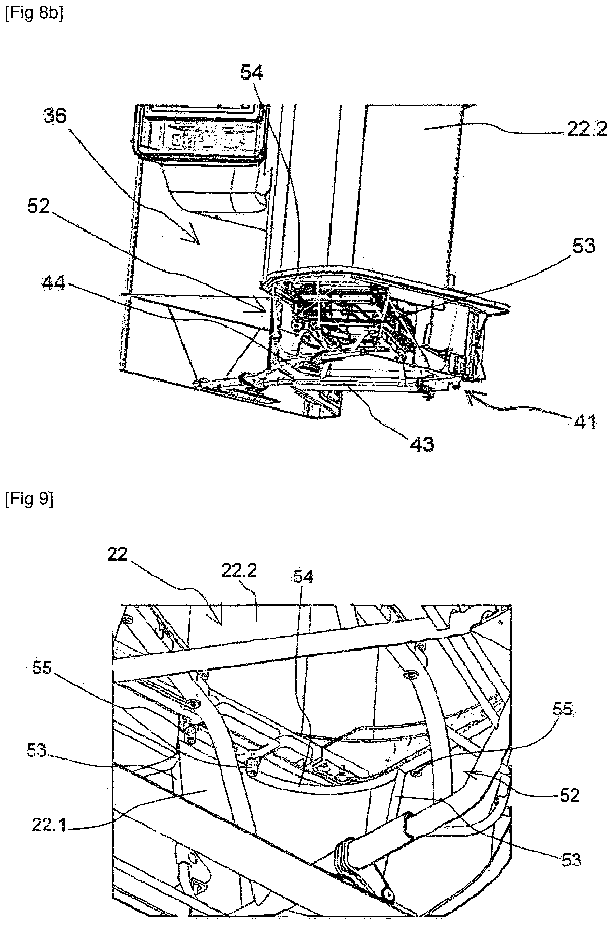

La console 23 comporte une face supérieure 32 sur laquelle le passager pourra poser des objets, tel que montré sur les figures 3a et 3b. La console 23 pourra intégrer une tablette repas amovible 33, des rangements 34, ainsi que des prises électriques 35 pour le rechargement de dispositifs électroniques. La console 23 pourra également comporter un logement de pieds interne 36, bien visible en figure 8b, destiné à recevoir les pieds d'un passager arrière lorsque le siège 21 dudit passager arrière est en position lit.

La cinématique d'assise et de dossier 29, la coque d'intimité 22, et la console 23 sont montées sur la structure basse de siège 25, laquelle est fixée aux rails 26 de la cabine d'avion au moyen de verrous 38.

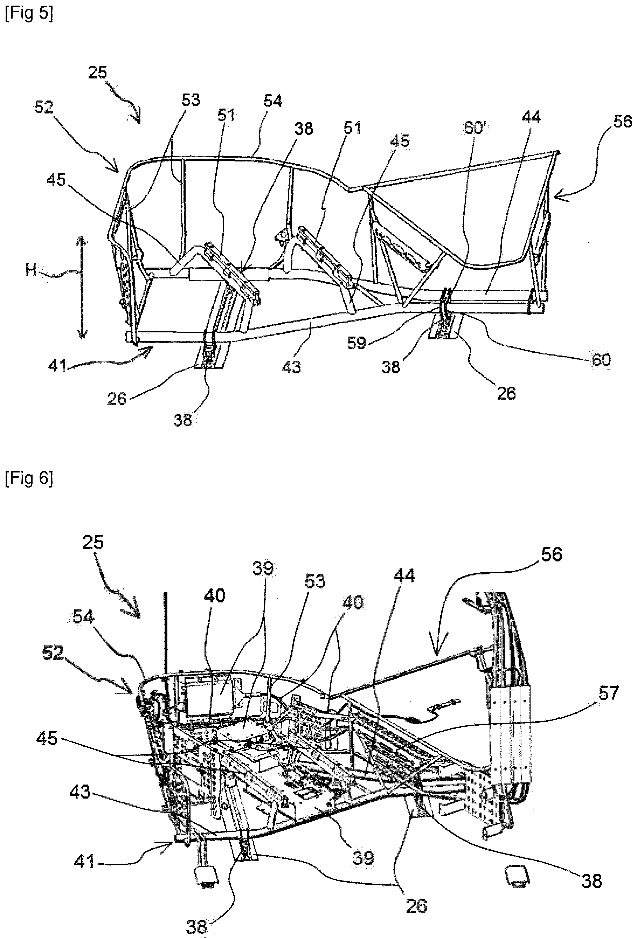

Comme on peut le voir sur les figures 3a et 6, des boîtiers électriques 39 sont positionnés sous le siège 21. Ces boîtiers électriques 39 sont destinés à alimenter, via un ensemble de faisceaux électriques 40, les différents organes électriques de l'unité de siège 20, tels que des actionneurs du siège 21 ou des écrans vidéo d'un système de divertissement de type IFE (pour "Inflight Entertainment" en anglais).

Avantageusement, comme cela est visible sur les figures 5 et 6, la structure basse de siège 25 comporte un châssis 41 à structure tubulaire. Par "châssis à structure tubulaire", on entend un châssis 41 formé par une pluralité de tube creux. De préférence, la structure tubulaire est une structure de type "mécano-soudée", c'est-à-dire une structure formée par des tubes métalliques creux soudés entre eux. Avantageusement, les tubes métalliques sont réalisés en acier. En variante, les tubes pourraient toutefois être réalisés dans un autre matériau métallique, tel qu'en aluminium ou en magnésium, ou tout autre matériau adapté à l'application. Les tubes présentent de préférence une section ronde ou ovale particulièrement bien adaptée pour supporter des efforts de torsion liés à la déformation du plancher de la cabine d'avion lors d'un crash. En variante, les tubes pourraient toutefois présenter une section rectangulaire, carrée, trapézoïdale, triangulaire ou toute autre forme adaptée à l'application.

La section pourra être constante suivant la longueur des tubes ou variable de façon à renforcer localement la structure dans des zones soumises à des contraintes mécaniques particulièrement importantes via des renforts soudés ou aboutés ou via une déformation du tube par un procédé de conification ("butted tubing" en anglais). En effet, la structure tubulaire permet de pouvoir définir indépendamment l'épaisseur de matière par rapport au diamètre interne d'un tube pour adapter la rigidité de la structure basse.

En l'occurrence, le châssis 41 comporte un premier tube inférieur 43 et un deuxième tube inférieur 44. Le premier tube inférieur 43 et le deuxième tube inférieur 44 portent chacun au moins un verrou 38 destiné à être fixé sur les rails 26 de la cabine d'avion.

Le châssis 41 comporte en outre deux pieds de fixation 45 de la cinématique d'assise et de dossier 29. Un pied de fixation 45 est formé par un tube relié par une de ses extrémités au premier tube inférieur 43 du châssis 41 et par son autre extrémité au deuxième tube inférieur 44 du châssis 41.

Comme on peut bien le voir sur les figures 4a et 4b, les pieds de fixation 45 s'étendent en saillie par rapport à un plan P dans lequel s'étendent le premier tube inférieur 43 et le deuxième tube inférieur 44 du châssis 41. Un pied de fixation 45 comporte une portion supérieure 48 et deux portions de liaison 49. Une portion de liaison 49 relie mécaniquement une extrémité de la portion supérieure 48 à un tube inférieur 43, 44 correspondant.

La cinématique d'assise et de dossier 29 est destinée à être fixée sur des guides de fixation 51. Un guide de fixation 51 est disposé sur une portion supérieure 48 d'un pied de fixation 45 correspondant de façon à être facilement accessible pour l'opérateur. Les guides de fixation 51 ont également une fonction d'indexage afin de faciliter le positionnement de la cinématique d'assise et de dossier 29 lors du montage du siège 21.

Le premier tube inférieur 43 et le deuxième tube inférieur 44 sont cintrés de sorte qu'un écart entre le premier tube inférieur 43 et le deuxième tube inférieur 44 est variable lorsqu'on se déplace d'une extrémité à l'autre des tubes 43, 44, tel que cela est illustré par les figures 5 et 6. En l'occurrence, l'écart entre les deux tubes inférieurs 43, 44 a tendance à diminuer lorsque l'on se déplace d'une extrémité située du côté des pieds de fixation 45 vers l'extrémité opposée. Une telle configuration permet d'optimiser l'encombrement au sol de la structure basse de siège 25.

La structure basse de siège 25 comporte en outre une ceinture de renforcement 52 formée par une pluralité de tubes 53, 54. La pluralité de tubes 53, 54 de la ceinture de renforcement 52 est reliée mécaniquement aux tubes inférieurs 43, 44. La ceinture de renforcement 52 est entourée par une partie de la coque d'intimité 22. Au moins une partie de la coque d'intimité 22 est fixée à la ceinture de renforcement 52.

La ceinture de renforcement 52 permet de reprendre efficacement des efforts appliqués sur la coque d'intimité 22 en cas de choc. On améliore ainsi la tenue mécanique de la coque d'intimité 22 lors d'un crash. En outre, du fait d'une fixation distincte de la coque 22 et du siège 21 à la structure basse de siège 25, une telle configuration permet de répartir et diviser les chemins d'efforts appliqués sur l'unité de siège 20 lors d'un crash.

Plus précisément, dans l'exemple représenté, la ceinture de renforcement 52 comporte des tubes montants 53 et un tube de liaison 54 reliant entre eux les tubes montants 53. A cet effet, les tubes montants 53 sont reliés par une extrémité à un des tubes inférieurs 43, 44 et par une autre extrémité au tube de liaison 54. Le tube de liaison 54 s'étend dans un plan sensiblement horizontal. Des tubes de renfort supplémentaires pourront être utilisés pour relier entre eux deux tubes montants 53 adjacents. Une autre configuration de tubes 53, 54 est bien entendu envisageable.

Avantageusement, la ceinture de renforcement 52 s'étend verticalement suivant une hauteur comprise entre 12 cm et 50 cm, et valant de préférence de l'ordre de 38 cm. Par "de l'ordre de", on entend une variation de plus ou moins 10% autour de la valeur cible.

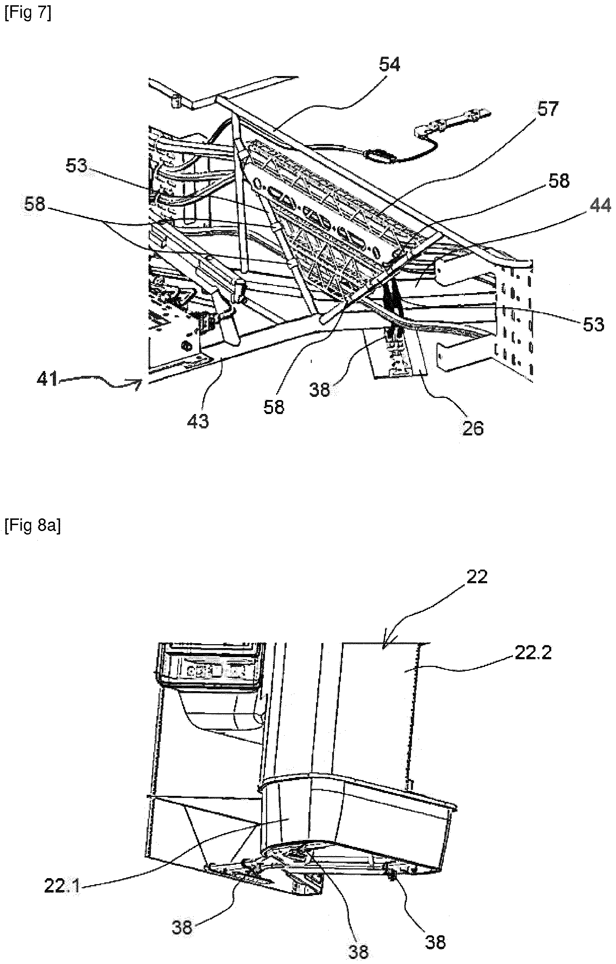

Comme cela est illustré par les figures 8a et 8b, la coque d'intimité 22 est réalisée de préférence en deux parties. Ainsi, la coque d'intimité 22 comporte une partie inférieure 22.1 et une partie supérieure 22.2, de sorte qu'il est possible de démonter uniquement la partie inférieure 22.1 pour accéder aux boîtiers électriques 39 situés sous le siège 21.

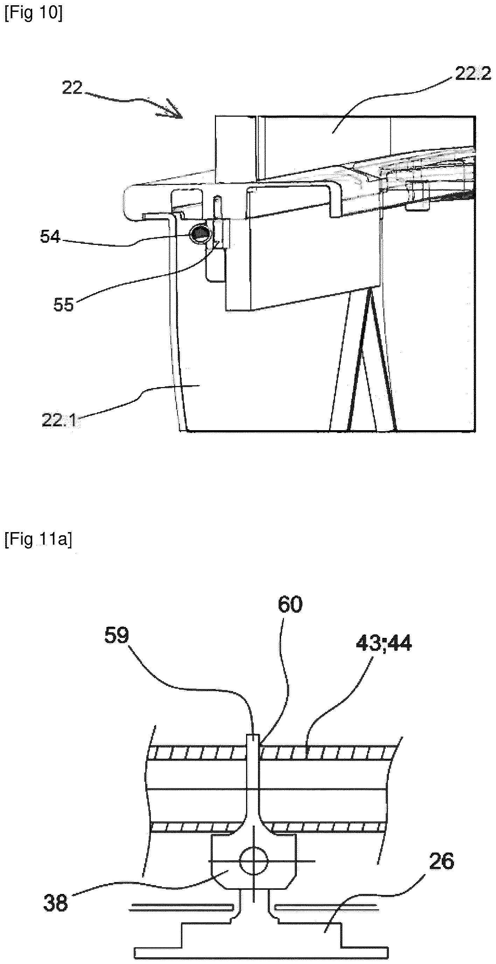

Comme on peut le voir sur les figures 9 et 10, la fixation de la coque d'intimité 22 sur la ceinture de renforcement 52 pourra être effectuée au moyen de manchons 55 solidaires du tube de liaison 54. Un organe de fixation, tels qu'une vis, est inséré à l'intérieur d'un manchon 55 de façon à coopérer avec un taraudage réalisés dans une pièce d'interface de la coque 22. En variante, les vis pourront être remplacées par rivets, des goujons, ou tout autre organe de fixation adapté à l'application.

La ceinture de renforcement 52 pourra être prolongée par une portion tubulaire 56 à laquelle est fixée la console 23. En l'occurrence la portion tubulaire 56 présente une forme triangulaire correspondant à la forme de la console 23.

De préférence, au moins une goulotte 57 de passage de faisceaux électriques 40 est fixée sur la ceinture de renforcement 52, tel que cela est représenté sur les figures 6 et 7. A cet effet, la goulotte 57 comporte de préférence des moyens de fixation amovibles 58 permettant à l'opérateur de fixer aisément la goulotte 57 sur des tubes 53, 54 de la ceinture de renforcement 52. Les moyens de fixation amovibles 58 pourront par exemple consister en des dispositifs d'encliquetage déformables élastiquement, par exemple en forme de C.

Les faisceaux électriques 40 issus des boîtiers électriques 39 et destinés à être reliés aux différents organes électriques du siège 21 pourront ainsi être disposés à l'intérieur des goulottes 57 afin de faciliter leur installation en partie basse du siège 21.

L'unité de siège 20 comporte de préférence trois verrous 38 de façon à présenter une configuration à trois points de fixation. En variante, l'unité de siège 20 pourrait toutefois comporter plus de trois verrous 38.

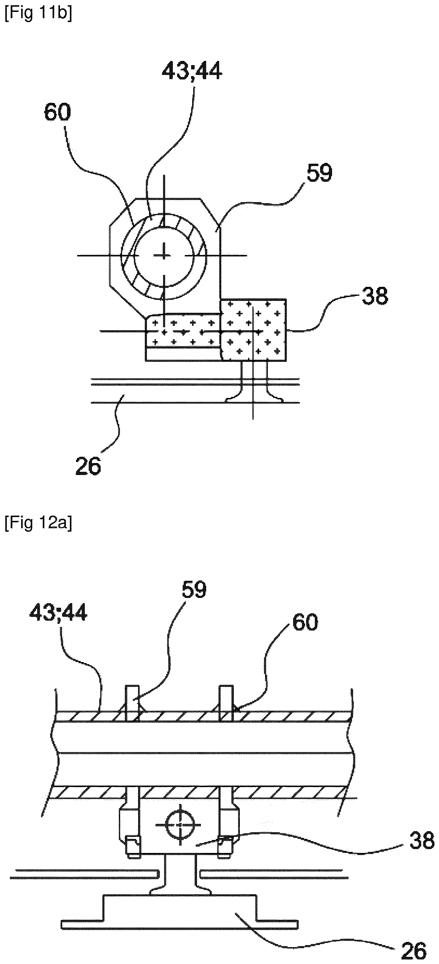

Comme on peut le voir sur les figures 11a, 11b, 12a, 12b, 13a, et 13b, un verrou 38 est associé à un support de verrou 59. Le verrou 38 est monté rotatif autour d'un axe horizontal par rapport au support de verrou 59 pour faciliter, via la présence d'un degré de liberté en rotation, sa mise en place sur un rail 26 correspondant. Dans ce cas, l'axe de pivotement du verrou 38 s'étend suivant une direction longitudinale par rapport à l'axe longitudinal de l'avion.

Le support de verrou 59 pourra comporter une seule ouverture 60 pour le passage d'un tube inférieur 43, 44 de façon à autoriser un déplacement du support de verrou 59 le long du tube inférieur 43, 44 avant immobilisation par soudage dudit support de verrou 59 dans une position correspondant à un positionnement d'un rail 26.

Alternativement, le support de verrou 59 situé à droite sur la figure 5 comporte deux ouvertures 60, 60' pour le passage respectivement du premier tube inférieur 43 et du deuxième tube inférieur 44 de façon à autoriser un déplacement du support de verrou 59 le long des tubes inférieurs 43, 44 avant immobilisation par soudage dudit support de verrou 59 dans une position correspondant à un positionnement d'un rail 26. Dans ce cas, l'axe de pivotement du verrou 38 s'étend suivant une direction transversale par rapport à l'axe longitudinal de l'avion.

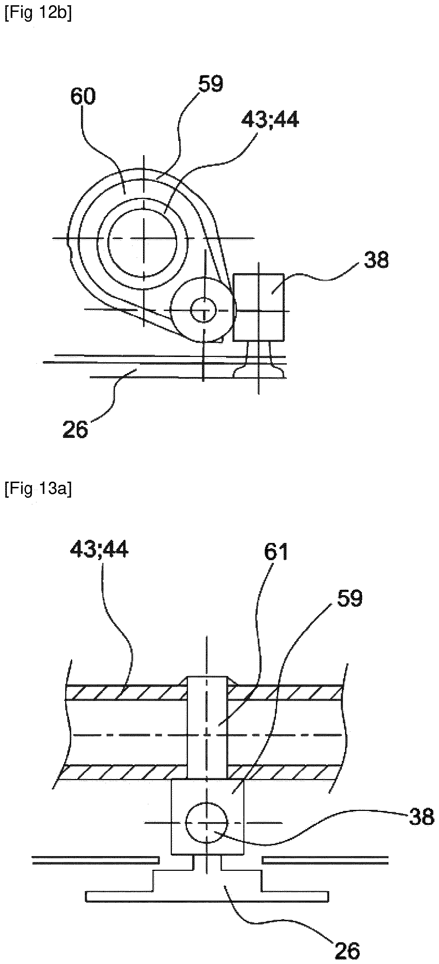

Dans le mode de réalisation des figures 12a et 12b, le support de verrou 59 est réalisé en deux parties.

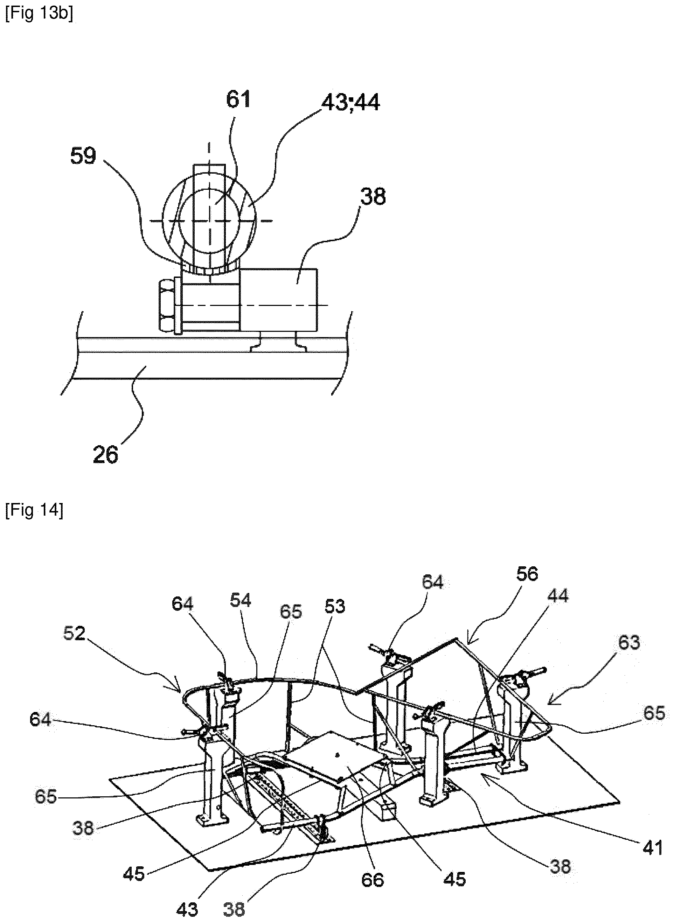

Dans le mode de réalisation des figures 13a et 13b, le support de verrou 59 est fixé à un tube inférieur 43, 44 correspondant au moyen d'un axe 61 traversant un tube inférieur 43, 44 correspondant.

Afin de réaliser la structure basse de siège 25 selon l'invention, on utilise un gabarit 63 montré sur la figure 14. Les différents tubes 43, 44, 53, 54 du châssis 41 et de la ceinture de renforcement 52 sont maintenus en position à l'aide de pinces 64 portées par des colonnes 65 du gabarit 63. Les supports de verrou 38 sont déplacés le long des tubes inférieurs 43, 44 de façon à coopérer avec les rails 26 correspondants disposés à des endroits correspondant à une configuration de cabine particulière. Une plaque 66 permet de définir l'écart entre les pieds de fixation 45 du siège 21.

Une fois que l'ensemble des éléments de la structure basse de siège 25 se situe dans une position souhaitée, un opérateur ou un robot pourra assurer le soudage des tubes 43, 44, 53, 54 entre eux ainsi que le soudage des supports de verrou 38 sur les tubes inférieurs 43, 44. On obtient ainsi la structure basse de siège 25. Le gabarit 63 permet ainsi de conférer une grande modularité de la structure basse de siège 25 qui pourra aisément s'adapter à la configuration de la cabine d'avion, du siège 21, de la console 23, et au positionnement des rails 26.

Lors du montage de l'unité de siège 20 à l'intérieur de la cabine d'avion, la structure basse de siège 25 associée à la coque d'intimité 22 et à la console 23 est montée dans un premier temps sur les rails 26 via les verrous 38, tel que cela est illustré par les figures 3a et 4a.

Puis, comme cela est illustré par les figures 3b et 4b, la cinématique d'assise et de dossier 29 est mise en place sur les guides de fixation 51 qui assurent l'indexage en position de la cinématique d'assise et de dossier 29. Une fois que la cinématique d'assise et de dossier 29 se situe dans une position correcte par rapport à la coque d'intimité 22, la cinématique d'assise et de dossier 29 est fixée sur les guides de fixation 51 à l'aide de moyens de fixation adaptés, tels que des vis ou des rivets.

Dans l'exemple représenté, le siège 21 présente un axe formant un angle non nul par rapport à un axe longitudinal de l'avion. En variante, l'axe du siège 21 pourra s'étendre parallèlement par rapport à l'axe longitudinal de l'avion.

En variante, le siège 21 pourra présenter plusieurs places. En variante, plusieurs sièges 21 pourront être installés sur une même structure basse de siège 25.

L'invention a également pour objet un avion comportant une pluralité d'unités de sièges 20 telles que précédemment définies.

## Revendications

1. Unité de siège (20), notamment pour une cabine d'avion, comportant:
- un siège (21) muni d'une cinématique d'assise et de dossier (29), et
- une structure basse de siège (25) sur laquelle est monté le siège (21), ladite structure basse de siège (25) comportant un châssis (41) à structure tubulaire comprenant:
- un premier tube inférieur (43) et un deuxième tube inférieur (44), le premier tube inférieur (43) et le deuxième tube inférieur (44) portant chacun au moins un verrou (38) destiné à être fixé sur des rails (26), et
- deux pieds de fixation (45) de la cinématique d'assise et de dossier (29), un pied de fixation (45) étant formé par un tube relié par une de ses extrémités au premier tube inférieur (43) du châssis (41) et par son autre extrémité au deuxième tube inférieur (44) du châssis (41),
- l'unité de siège comportant en outre une coque d'intimité (22),
**caractérisée en ce que** la structure basse de siège (25) comporte en outre une ceinture de renforcement (52) formée par une pluralité de tubes (53, 54) reliée mécaniquement aux tubes inférieurs (43, 44), au moins une partie de la coque d'intimité (22) étant fixée à ladite ceinture de renforcement (52).

2. Unité de siège selon la revendication 1, **caractérisée en ce que** les pieds de fixation (45) s'étendent en saillie par rapport à un plan (P) dans lequel s'étendent le premier tube inférieur (43) et le deuxième tube inférieur (44) du châssis (41).

3. Unité de siège selon la revendication 1 ou 2, **caractérisée en ce qu'**un guide de fixation (51) est disposé sur une portion supérieure (48) d'un pied de fixation (45) correspondant.

4. Unité de siège selon l'une quelconque des revendications 1 à 3, **caractérisée en ce que** le premier tube inférieur (43) et le deuxième tube inférieur (44) sont cintrés de sorte qu'un écart entre le premier tube inférieur (43) et le deuxième tube inférieur (44) est variable lorsqu'on se déplace d'une extrémité à l'autre des tubes (43, 44).

5. Unité de siège selon l'une quelconque des revendications 1 à 4, **caractérisée en ce que** la ceinture de renforcement (52) est entourée par une partie de la coque d'intimité (22).

6. Unité de siège selon l'une quelconque des revendications 1 à 5, **caractérisée en ce que** la ceinture de renforcement (52) s'étend verticalement suivant une hauteur (H) comprise entre 12 cm et 50 cm, et valant de préférence de l'ordre de 38 cm.

7. Unité de siège selon l'une quelconque des revendications 1 à 6, **caractérisée en ce que** la coque d'intimité (22) comporte une partie inférieure (22.1) et une partie supérieure (22.2), de sorte qu'il est possible de démonter uniquement la partie inférieure (22.1) pour accéder à des boîtiers électriques (39) situés sous le siège (21).

8. Unité de siège selon l'une quelconque des revendications 1 à 7, **caractérisée en ce qu'**au moins une goulotte (57) de passage de faisceaux électriques (40) est fixée sur la ceinture de renforcement (52).

9. Unité de siège selon l'une quelconque des revendications 1 à 8, **caractérisée en ce qu'**elle comporte trois verrous (38) de façon à présenter une configuration à trois points de fixation.

10. Unité de siège selon l'une quelconque des revendications 1 à 9, **caractérisée en ce qu'**un verrou (38) est associé à un support de verrou (59).

11. Unité de siège selon la revendication 10, **caractérisée en ce que** le support de verrou (59) comporte une seule ouverture (60) pour le passage d'un tube inférieur (43, 44) de façon à autoriser un déplacement du support de verrou (59) le long du tube inférieur (43, 44) avant immobilisation par soudage dudit support de verrou (59) dans une position correspondant à un positionnement d'un rail (26).

12. Unité de siège selon la revendication 10, **caractérisée en ce que** le support de verrou (59) comporte deux ouvertures (60, 60') pour le passage respectivement du premier tube inférieur (43) et du deuxième tube inférieur (44) de façon à autoriser un déplacement du support de verrou (59) le long des tubes inférieurs (43, 44) avant immobilisation par soudage dudit support de verrou (59) dans une position correspondant à un positionnement d'un rail (26).

13. Unité de siège selon l'une quelconque des revendications 10 à 12, **caractérisée en ce que** le support de verrou (59) est réalisé en deux parties.

14. Avion comportant une pluralité d'unités de sièges (20) telles que définies selon l'une quelconque des revendications précédentes.

## Patentansprüche

1. Sitzeinheit (20), insbesondere für eine Flugzeugkabine, umfassend:
- einem Sitz (21), der mit einer Sitzflächen- und Rückenlehnen-Kinematik (29) ausgestattet ist, und
- eine untere Sitzstruktur (25), auf der der Sitz (21) montiert ist, wobei die untere Sitzstruktur (25) einen Rahmen (41) mit einer Rohrstruktur umfasst, die umfasst:
- ein erstes Unterrohr (43) und ein zweites Unterrohr (44), wobei das erste Unterrohr (43) und das zweite Unterrohr (44) jeweils mindestens einen Riegel (38) zur Befestigung an Schienen (26) tragen, und
- zwei Befestigungsfüßen (45) der Sitzflächen- und Rückenlehnen-Kinematik (29), wobei ein Befestigungsfuß (45) durch ein Rohr gebildet ist, das an einem seiner Enden mit dem ersten Unterrohr (43) des Rahmens (41) und an seinem anderen Ende mit dem zweiten Unterrohr (44) des Rahmens (41) verbunden ist,
- wobei die Sitzeinheit außerdem eine Sichtschutzschale (22) aufweist,
**dadurch gekennzeichnet, dass** die untere Sitzstruktur (25) außerdem einen Verstärkungsgurt (52) umfasst, der aus einer Mehrzahl von Rohren (53, 54) besteht, die mechanisch mit den unteren Rohren (43, 44) verbunden sind, wobei zumindest ein Abschnitt der Sichtschutzschale (22) an dem Verstärkungsgurt (52) befestigt ist.

2. Sitzeinheit nach Anspruch 1, **dadurch gekennzeichnet, dass** die Befestigungsfüße (45) aus einer Ebene (P) herausragen, in der das erste Unterrohr (43) und das zweite Unterrohr (44) des Rahmens (41) verlaufen.

3. Sitzeinheit nach Anspruch 1 oder 2, **dadurch gekennzeichnet, dass** eine Befestigungsführung (51) an einem oberen Abschnitt (48) eines entsprechenden Befestigungsfußes (45) angeordnet ist.

4. Sitzeinheit nach einem der Ansprüche 1 bis 3, **dadurch gekennzeichnet, dass** das erste Unterrohr (43) und das zweite Unterrohr (44) derart gebogen sind, dass ein Spalt zwischen dem ersten Unterrohr (43) und dem zweiten Unterrohr (44) beim Bewegen von einem Ende der Rohre (43, 44) zum anderen veränderbar ist.

5. Sitzeinheit nach einem der Ansprüche 1 bis 4, **dadurch gekennzeichnet, dass** der Verstärkungsgurt (52) von einem Abschnitt der Sichtschutzschale (22) umgeben ist.

6. Sitzeinheit nach einem der Ansprüche 1 bis 5, **dadurch gekennzeichnet, dass** sich der Verstärkungsgurt (52) vertikal über eine Höhe (H) zwischen 12cm und 50cm, vorzugsweise in der Größenordnung von 38cm, erstreckt.

7. Sitzeinheit nach einem der Ansprüche 1 bis 6, **dadurch gekennzeichnet, dass** die Sichtschutzschale (22) aus einem Unterteil (22.1) und einem Oberteil (22.2) besteht, so dass nur das Unterteil (22.1) abmontiert werden kann, um Zugang zu den Elektrokästen (39) unter dem Sitz (21) zu erhalten.

8. Sitzeinheit nach einem der Ansprüche 1 bis 7, **dadurch gekennzeichnet, dass** an dem Verstärkungsgurt (52) mindestens eine Rutsche (57) zum Durchführen von elektrischen Kabelbäumen (40) befestigt ist.

9. Sitzeinheit nach einem der Ansprüche 1 bis 8, **dadurch gekennzeichnet, dass** sie drei Riegel (38) umfasst, so dass eine Dreipunktbefestigungskonfiguration aufweist.

10. Sitzeinheit nach einem der Ansprüche 1 bis 9, **dadurch gekennzeichnet, dass** einem Riegel (38) eine Riegelhalterung (59) zugeordnet ist.

11. Sitzeinheit nach Anspruch 10, **dadurch gekennzeichnet, dass** die Riegelhalterung (59) eine einzige Öffnung (60) für den Durchgang eines unteren Rohrs (43, 44) aufweist, um eine Bewegung der Riegelhalterung (59) entlang des unteren Rohrs (43, 44) zu ermöglichen, bevor sie durch Schweißen in einer einer Positionierung einer Schiene (26) entsprechenden Position fixiert wird.

12. Sitzeinheit nach Anspruch 10, **dadurch gekennzeichnet, dass** die Riegelhalterung (59) zwei Öffnungen (60, 604) für den Durchgang des ersten unteren Rohrs (43) bzw. des zweiten unteren Rohrs (44) aufweist, um eine Bewegung der Riegelhalterung (59) entlang der unteren Rohre (43, 44) zu ermöglichen, bevor sie durch Schweißen in einer einer Positionierung einer Schiene (26) entsprechenden Position fixiert wird.

13. Sitzeinheit nach einem der Ansprüche 10 bis 12, **dadurch gekennzeichnet, dass** die Riegelhalterung (59) zweiteilig ausgebildet ist.

14. Flugzeug mit einer Mehrzahl von Sitzeinheiten (20) gemäß einem der vorhergehenden Ansprüche.

## Claims

1. A seat unit (20), in particular for an aircraft cabin, comprising:
- a seat (21) equipped with a sitting surface and backrest kinematics (29), and
- a low seat structure (25) on which the seat (21) is mounted, said low seat structure (25) comprising a frame (41) with a tubular structure comprising:
- a first lower tube (43) and a second lower tube (44), the first lower tube (43) and the second lower tube (44) each carrying at least one lock (38) for the fixation to rails (26), and
- two fixing feet (45) of the sitting surface and backrest kinematics (29), a fixing foot (45) being formed by a tube connected at one of its ends to the first lower tube (43) of the frame (41) and at its other end to the second lower tube (44) of the frame (41),
- the seat unit further comprising a privacy shell (22),
**characterized in that** the low seat structure (25) further comprises a reinforcing belt (52) formed by a plurality of tubes (53, 54) mechanically connected to the lower tubes (43, 44), at least a portion of the privacy shell (22) being fixed to said reinforcing belt (52).

2. The seat unit according to claim 1, **characterized in that** the fixing feet (45) project from a plane (P) in which the first lower tube (43) and the second lower tube (44) of the frame (41) extend.

3. The seat unit according to claim 1 or 2, **characterized in that** a fixing guide (51) is arranged on an upper portion (48) of a corresponding fixing foot (45).

4. The seat unit according to any one of the claims 1 to 3, **characterized in that** the first lower tube (43) and the second lower tube (44) are bent so that a gap between the first lower tube (43) and the second lower tube (44) is variable when moving from one end of the tubes (43, 44) to the other.

5. The seat unit according to any one of the claims 1 to 4, **characterized in that** the reinforcing belt (52) is surrounded by a portion of the privacy shell (22).

6. The seat unit according to any one of the claims 1 to 5, **characterized in that** the reinforcing belt (52) extends vertically over a height (H) between 12cm and 50cm, and preferably of the order of 38cm.

7. The seat unit according to any one of the claims 1 to 6, **characterized in that** the privacy shell (22) comprises a lower portion (22.1) and an upper portion (22.2), so that it is possible to dismantle only the lower portion (22.1) to have access to electrical boxes (39) under the seat (21).

8. The seat unit according to any one of the claims 1 to 7, **characterized in that** at least one cable duct (57) for the passage of electrical harnesses (40) is fixed to the reinforcing belt (52).

9. The seat unit according to any one of the claims 1 to 8, **characterized in that** it comprises three locks (38) so as to have a three-point fixing configuration.

10. The seat unit according to any one of the claims 1 to 9, **characterized in that** a lock (38) is associated with a lock support (59).

11. The seat unit according to claim 10, **characterized in that** the lock support (59) comprises a single opening (60) for the passage of a lower tube (43, 44) so as to allow movement of the lock support (59) along the lower tube (43, 44) before immobilization by welding said lock support (59) in a position corresponding to a positioning of a rail (26).

12. The seat unit according to claim 10, **characterized in that** the lock support (59) comprises two openings (60, 60') for the passage of the first lower tube (43) and the second lower tube (44), respectively, so as to allow movement of the lock support (59) along the lower tubes (43, 44) before immobilization by welding said lock support (59) in a position corresponding to a positioning of a rail (26).

13. The seat unit according to any one of the claims 10 to 12, **characterized in that** the lock support (59) is made in two parts.

14. An aircraft comprising a plurality of seat units (20) as defined in any one of the preceding claims.
